# EUROPÄISCHE PATENTANMELDUNG

(11) **EP 1 692 933 A1**
(43) Veröffentlichungstag der Anmeldung: **23.08.2006**
(21) Anmeldenummer: 06003251.3
(22) Anmeldetag: 17.02.2006
(51) Int. Cl.: A01G 23/00, B60P 3/41

(54) **Vorrichtung zum Rücken und Laden von Lang- oder Kurzholz**

(30) Priorität: 17.02.2005 DE 102005007139
(71) Anmelder: Krammel, Stilla, 93077 Bad Abbach (DE)
(72) Erfinder: Krammel, Stilla, 93077 Bad Abbach (DE)
(74) Vertreter: Epping - Hermann - Fischer

(57) **Zusammenfassung**

Vorrichtung zum Rücken und Laden von Lang- oder Kurzholz (10) mit einem Transportfahrzeug (1,2), das zum Transport des Lang- oder Kurzholzes vorgesehen ist, mit einer Seilwinde (5,6), die vorne an dem Transportfahrzeug angeordnet ist, und mit einem Zugseil (12), mit dem das Lang- oder Kurzholz (10) vermittels der Seilwinde (5,6) zum Transportfahrzeug (1,2) hin rückbar ist. Hinten am Transportfahrzeug (1,2) ist eine Anhebeeinrichtung (3,4) mit einem Auflageelement (11) angeordnet, das vermittels der Anhebeeinrichtung (3,4) wahlweise absenkbar oder anhebbar ist, derart, dass vermittels der Seilwinde (5,6) auf das Auflageelement (11) gerücktes Lang- oder Kurzholz angehoben und nachfolgend über das Auflageelement (11) hinweg auf das Transportfahrzeug (1,2) gezogen und geladen werden kann.

## Beschreibung

Die vorliegende Erfindung bezieht sich auf eine Vorrichtung zum Rücken und Laden von Lang- oder Kurzholz gemäß dem Oberbegriff des Patentanspruches 1.

Bekannt ist, dass für die Holzernte eine Vielzahl von unterschiedlichen Arbeitsschritten notwendig ist. Der prinzipielle Ablauf der Holzernte gestaltet sich in der nachfolgend beschriebenen Weise, wobei einzelne Arbeitsschritte durch manuelle oder maschinelle Arbeitsweisen ersetzt oder zusammengefasst werden können.

Der Baum wird mit der Motorsäge und einem Fällschnitt manuell mit einem Keil oder maschinell mit einer Seilwinde oder dergleichen gefällt. Nach dem Fällen wird das Lang- oder Kurzholz aus dem Bestand mit einer Seilwinde oder einer Rückezange zur Forststraße bzw. einem geeigneten Ladeplatz transportiert. Dieser Vorgang wird "Rücken" genannt. An der Forststraße oder dem Ladeplatz wird das Lang- oder Kurzholz durch einen Holzkran oder Frontlader auf ein entsprechendes Transportfahrzeug wie. z.B. Anhänger, Rückeanhänger oder Holztransporter geladen und über öffentliche Verkehrswege zur Verwertungsstelle transportiert.

Die optimale Durchführung der vorgenannten Arbeitsschritte für die Holzernte können durch verschiedene Faktoren beeinträchtigt oder erschwert werden. Zu diesen Faktoren gehören beispielsweise die Beschaffenheit des Geländes, die Bodenverhältnisse, die Erschließung des Grundstückes mit Wegen oder Rückegassen, die Größe des Grundstückes, die maschinelle Ausrüstung des Waldbesitzers sowie die Baumart, Baumgröße und Bestandsdichte.

Entsprechende maschinelle Hilfsmittel werden für das Rücken des Baumholzes aus dem Bestand zur Forststraße oder zum Ladeplatz und das Verladen des Baumholzes, sowie für die Holzbergung und den Holztransport zur Forststraße oder zum Holzladeplatz eingesetzt.

Der Traktor mit Seilwinde ist wohl das gebräuchlichste Verfahren des mechanisierten Holztransports aus dem Bestand zur Forststraße oder zum Ladeplatz. Landwirtschaftliche Traktoren werden aufgrund ihrer Vielseitigkeit vor allem für das Rücken von Baumholz eingesetzt. Zunehmende Verwendung findet auch der Traktor mit Kranrückewagen im bäuerlichen Privatwald. Mit dem Kran kann das Holz auf den Rückewagen aufgeladen werden, wenn es die äußeren Umstände, wie Zugänglichkeit und Bodenverhältnisse, etc. erlauben.

Ein bekannter Schlepper ist der sogenannte Klemmbankschlepper. Dieser ist ein Forstspezialschlepper. Die Ladekapazität des Klemmbankschleppers je Lastfahrt ist sehr hoch und bietet gegenüber anderen Verfahren entsprechende Vorteile. Der Klemmbankschlepper ist besonders geeignet für das Rücken von Bäumen großer Länge, wobei auch hier die äußeren Rahmenbedingungen gegeben sein müssen.
Weiterhin bekannt ist der sogenannte Forwarder-Tragschlepper mit Kranausstattung. Dieser wird für Kurzholzlängen und Fixholzlängen bis 7 m Länge eingesetzt. Das Kurzholz wird vor Ort im Bestand aufgeladen.

Alle diese Fahrzeuge bieten Vorteile, wobei die praktische Verwendung mit verschiedenden Nachteilen bzw. Einschränkungen verbunden sind. Diese Einschränkungen ergeben sich beispielsweise durch die Verwendung eines Holzladekrans, der in verschiedenen Transportsystemen angewendet wird. Der Ladekran ist in seiner Reichweite und Hubkraft eingeschränkt. Das heißt, das Holz kann nur in einem bestimmten Bereich aufgeladen werden, wobei sich durch die notwendige große Reichweite des Krans eine Reduzierung der Hubkraft zwangsläufig ergibt. Die eingeschränkte Reichweite des Ladekrans erfordert zudem ein oftmaliges Verändern des Standortes im Bestand zum Verladen des Holzes z.B. auf den Rückeanhänger.

Nachteilig wirkt sich vor allem auch das hohe Gewicht der Transportfahrzeuge auf den Waldboden aus. Hierbei sind vor allem Forwarder-Tragschlepper, Klemmbankschlepper, Traktoren mit Rückeanhänger und Kettenfahrzeuge mit einem Holzprozessor zu nennen. Diese Fahrzeuge verursachen beim Befahren von Waldböden nachweisbare Verdichtungen im Waldboden, die sich negativ auf das Wachstum und die Gesundheit der Bäume auswirken.

Das Ziel der nachhaltigen Forstwirtschaft besteht darin, die Anzahl der Fahrbewegungen im Waldbestand auf das Notwendigste zu reduzieren. Die Fahrbewegungen sollten sich daher auf die Fahrgassen und Forstwege beschränken. Der Einsatz der genannten Transportfahrzeuge wird außerdem durch die Befahrbarkeit, die Bodenbeschaffenheit des Waldbodens und die Wetterverhältnisse eingeschränkt.

Kennzeichnend für die vorstehend dargestellten bekannten Arbeitsweisen ist die getrennte Arbeitsweise für das Rücken des Holzes aus dem Bestand zur Forststraße oder zum Ladeplatz und das Beladen des Kurzholzes oder der Fixlängen auf ein entsprechendes Transportfahrzeug.

Bei genauerer Betrachtung wird der Aufwand noch deutlicher. Nach dem Fällen des Baumes ist ein Rücken des Baumes unter Zuhilfenahme einer Rückezange oder Seilwinde notwendig. Dieses Verfahren wird vor allem im bäuerlichen Privatwald angewendet. Dabei wird der Baum mittels einer Rückekette mit einer Seilwinde verbunden und zur Forststraße transportiert. Am Lagerplatz angekommen, wird die Verbindung zwischen Baum und Seilwinde gelöst. Oftmals ist die Entfernung zwischen Aufnahmepunkt des Baumes und dem Lagerplatz sehr groß, wobei damit der zeitliche Aufwand nicht unerheblich ist.

Am Lagerplatz selbst wird das Baumholz mit Frontlader oder Rückewagen aufgeladen und zur Verwertungsstelle transportiert. In vielen Fällen steht kein geeigneter Lagerplatz zur Verfügung oder die Entfernungen sind so groß, dass das Rücken mit einem erheblichen zeitlichen Aufwand verbunden ist. Zudem ist das Rücken des Baumholzes ein unfallträchtiger Arbeitsvorgang.

Außerdem erschweren wechselnde Bodenverhältnisse in Verbindung mit den Wetterverhältnissen und die Beschaffenheit des Lagerplatz das Beladen der Holztransportfahrzeuge.

Bei objektiver Betrachtung ist daher erkennbar, dass die getrennte Arbeitsweise vom Rücken des Baumholzes bis zum Beladen der Transportfahrzeuge mit einem erheblichen zeitlichen und materiellen Aufwand verbunden sind.

Aus dem druckschriftlichen Stand der Technik sind eine Reihe verschiedener Vorrichtungen verschiedenster Art zum Rücken und Laden von Holzstämmen bekannt, die zum Teil technisch kompliziert ausgeführt sind und/oder nach wie vor eine aufwändige Arbeitsweise und/oder viele Fahrbewegungen erfordern.

In der DE 3014426 C2 ist ein Holzrücke- und Transportfahrzeug mit einer kranartigen Ladeeinrichtung und einem Ausfahrteil mit einer muldenartigen Stammholzauflage beschrieben, das vermittels einer Teleskopeinrichtung von der kranartigen Ladeeinrichtung weg geschoben werden kann. Zum Aufladen eines Baumstammes wird mit der Ladeeinrichtung ein Ende des Holzstammes auf eine Höhe oberhalb der muldenartigen Stammholzauflage angehoben und das Ausfahrteil unter den Baumstamm und von der Ladeeinrichtung weg geschoben. Mit dieser Vorrichtung lässt sich nur ein einziger Holzstamm auf das Transportfahrzeug laden, der dann umgehend abtransportiert werden muss. Um mehrere Holzstämme abzutransportieren sind daher eine Vielzahl von Fahrten erforderlich.

In der US 2,088,828 ist eine Rücke- und Ladevorrichtung beschrieben, bei der mittels einer an einem Hubarm angeordneten Umlenkrolle, wobei der Hubarm an einer Längsseite eines Transportfahrzeuges angeordnet ist, Holzstämme gerückt und seitlich neben dem Transportfahrzeug liegende Holzstämme, die nach dem Rücken anderweitig in eine geeignete Lage gebracht werden müssen, vermittels eines Seilpaares über Laderampen seitlich auf das Transportfahrzeug gezogen werden. Diese Vorrichtung erfordert nach dem Rücken des Holzstammes in die Nähe des Transportfahrzeuges folgende separate Arbeitsschritte: (I) Lösen des Holzstammes vom Zugseil, (II) Drehen des Holzstammes neben das Transportfahrzeug, (III) Einhängen des Holzstammes in das Seilpaar und (IV) Ziehen des Holzstammes auf das Transportfahrzeug über die Laderampen. Diese Abfolge von Arbeitsschritten erfordert großen Arbeitsaufwand.
Der vorliegenden Erfindung liegt die Aufgabe zugrunde, eine technisch vereinfachte Vorrichtung zum Rücken und Laden von Lang- oder Kurzholz in einem Arbeitsvorgang bereitzustellen, die insbesondere ein Übereinanderschichten von Lang- oder Kurzholz auf dem Transportfahrzeug ermöglicht.

Diese Aufgabe wird durch eine (auch als Rückelader bezeichnete) Vorrichtung mit den Merkmalen des Patentanspruches 1 gelöst, dessen Inhalt hiermit durch Rückbezug ausdrücklich in die Beschreibung aufgenommen wird.

Vorteilhafte Ausführungsformen und Weiterbildungen sind Gegenstand der Unteransprüche 2 bis 10, deren Inhalt hiermit durch Rückbezug ausdrücklich in die Beschreibung aufgenommen wird.

Bei einer weiteren vorteilhaften Weiterbildung ist am hinteren Ende des Transportfahrzeugs mindestens ein Seilführungsmittel, insbesondere eine Seilführungsrolle, vorgesehen. Dieses Seilführungsmittel ist vorzugsweise an einer seitlich am Transportfahrzeug angeordneten senkrechten Stütze, beispielsweise an einer Runge, befestigt. Es kann beispielsweise auf einem Niveau oberhalb der maximalen Ladehöhe für die Holzstämme befestigt oder, falls zweckmäßig, höhenverstellbar sein. Das Seilführungsmittel erleichtert das Ausziehen des Zugseils zu den zu rückenden Holzstämmen hin sowie das Heranziehen der Holzstämme zum Anhänger, indem es ein Verklemmen des Zugseils zwischen bereits geladenen Holzstämmen verhindert. Nach dem Anheben eines Holzstammes mit der Anhebeeinrichtung wird das Zugseil aus dem Seilführungsmittel ausgehängt, um nachfolgend den Holzstamm zum vorderen Ende des Transportfahrzeuges hin ziehen zu können.

Bei einer vorteilhaften Vorrichtung bzw. einem Rückelader gemäß der Erfindung ist ein Anhänger, beispielsweise ein Einachsanhänger oder ein Zweiachsanhänger, an einem Ende mit einem rotatorisch drehbaren Drehrahmen oder einem linear beweglichen Hubrahmen ausgestattet. In Verbindung mit einer am Anhänger integrierten oder einer externen Seilwinde, die an der dem Drehrahmen bzw. Hubrahmen gegenüberliegenden Ende des Anhängers platziert ist, kann das Lang- oder Kurzholz mittels eines Seiles aus grosser Entfernung herangezogen bzw. gerückt, durch den rotatorisch drehbaren Drehrahmen oder den linear beweglichen Hubrahmen angehoben und mit dem Seil über eine Umlenkrolle und eine drehende Auflagerolle auf den Anhänger gezogen bzw. geladen werden. Bei einer alternativen Ausgestaltung ist an Stelle des Anhängers eine Ladefläche beispielsweise eines Lastkraftwagens verwendet.

Die mit der Erfindung erzielten Vorteile bestehen insbesondere darin, dass die bisher meist getrennten Arbeitsgänge Rücken und Laden auf einen Arbeitsgang zusammengefasst sind. Desweiteren ist es mit der Erfindung möglich, aus einem Umkreis von beispielsweise bis 30 Meter oder mehr das Lang- oder Kurzholz an den Rückelader zu rücken und zu laden, ohne die Verbindung zwischen Seil und Lang- oder Kurzholz lösen zu müssen. Zudem ist auch das aufwendige Rücken über die Forstwege zum Ladeplatz nicht mehr notwendig, da das Lang- oder Kurzholz im Bestand und sogar auf engsten Waldwegen direkt in einem Arbeitsgang geladen werden kann.

Weitere Vorteile, vorteilhafte Ausgestaltungen und Weiterbildungen der Vorrichtung ergeben sich aus den im Folgenden in Verbindung mit den Figuren 1 bis 6 erläuterten Ausführungsbeispielen. Die Figuren zeigen:
Fig. 1 eine schematische Darstellung einer Seitenansicht eines ersten Ausführungsbeispieles in einer ersten Arbeitsstellung;
Fig. 2 eine schematische Darstellung einer Seitenansicht des ersten Ausführungsbeispieles in einer zweiten Arbeitsstellung;
Fig. 3 eine schematische Darstellung einer Seitenansicht eines zweiten Ausführungsbeispieles beim Ladevorgang;
Fig. 4 eine schematische Darstellung einer Seitenansicht eines dritten Ausführungsbeispieles beim Entladevorgang;
Fig. 5 eine schematische Darstellung einer Seitenansicht eines vierten Ausführungsbeispieles in einer ersten Arbeitsstellung;
Fig. 6 eine schematische Darstellung einer Seitenansicht des vierten Ausführungsbeispieles in einer zweiten Arbeitsstellung;
Fig. 7 eine schematische Darstellung einer Seitenansicht eines fünften Ausführungsbeispieles in einer ersten Arbeitsstellung; und
Fig. 8 eine schematische Darstellung einer Seitenansicht des fünften Ausführungsbeispieles in einer zweiten Arbeitsstellung.

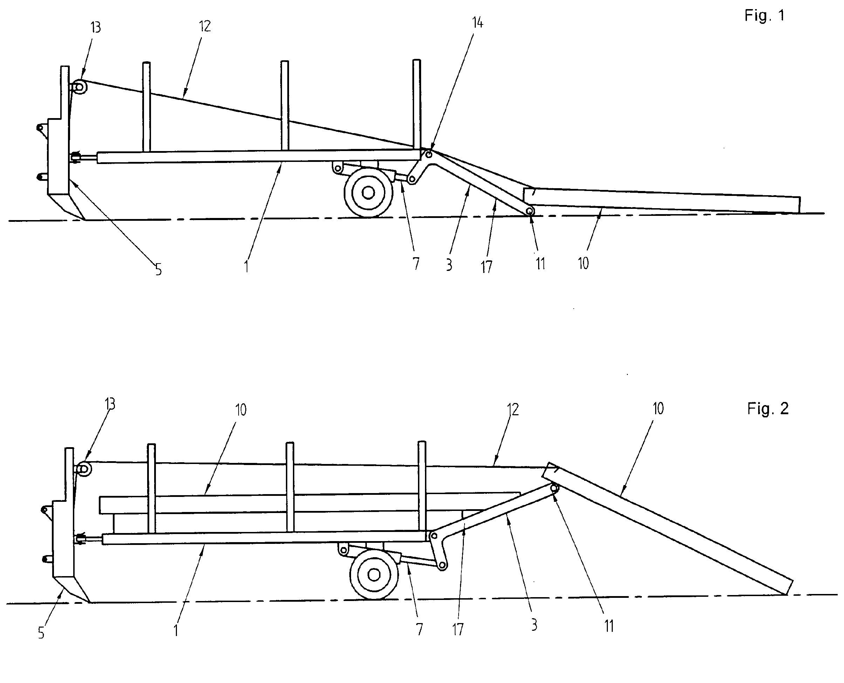

Bei der Vorrichtung gemäß Figur 1 handelt es sich um einen Rückelader auf Basis eines Anhängers 1 als Transportfahrzeug, hier beispielsweise ein Einachsanhänger. In der Figur dargestellt ist ein bereits an den Einachsanhänger herangezogenes Lang- oder Kurzholz 10. Am Einachsanhänger 1 ist vorne eine Seilwinde 5, hier beispielsweise eine externe Seilwinde, und hinten eine Anhebeeinrichtung 3 angeordnet.

Die Anhebeeinrichtung ist hierbei ein rotatorisch drehender Drehrahmen mit zwei Hubarmen 17, die an gegenüberliegenden Seiten einer Drehachse 14 am Anhänger 1 gelagert sind und zwischen deren von der Drehachse entfernten Enden ein Auflageelement für das Lang- oder Kurzholz 10, im Folgenden auch nur kurz "Holzstämme" bezeichnet, befestigt ist. Dieses Auflageelement kann unterschiedliche gestaltet sein, beispielsweise in Form einer einfachen geraden oder auch, falls zweckmäßig, gebogenen Stange oder in Form einer Auflagerolle 11, welche vorliegend als bevorzugtes Beispiel gewählt ist. Die beiden Hubarme 17 und das Auflageelement bilden zusammen einen offenen Drehrahmen aus, durch den hindurch geladene Holzstämme bei angehobenem Drehrahmen zum einen über das hintere Ende des Anhängers 1 hinaus ragen können und zum anderen abgeladen werden können.

Im Betrieb wird über die externe Seilwinde 5 Lang- oder Kurzholz 10 aus dem Waldbestand unter Umständen aus großer Entfernung unabhängig von den äußeren Umständen, wie z.B. von der Geländebeschaffenheit oder Bodenbeschaffenheit, zunächst an die Anhebeeinrichtung 3 herangezogen. Nachfolgend wird das vordere Ende eines Holzstammes, ohne es vom Seil der Seilwinde lösen zu müssen, auf die auf den Boden abgesenkte Anhebevorrichtung 3 gezogen, woraufhin die Anhebeeinrichtung 3 dieses vordere Ende auf die gewünschte Ladehöhe anhebt, bevor dann der Holzstamm vermittels der Seilwinde 5 über die Anhebevorrichtung 3 hinweg auf die Ladefläche des Anhängers 1 gezogen wird. Danach wird dann die Anhebevorrichtung wieder zum Boden hin abgesenkt, um gegebenenfalls weitere Holzstämme zu laden. Ein Mehrzahl von Holzstämmen kann auf diese Weise vorteilhafterweise jeweils in einem einzigen Arbeitsgang über den rotatorisch drehenden Drehrahmen 3 auf den Anhänger 1, der, wie konkret gezeigt, ein Einachsanhänger ohne Weiteres aber auch ein Mehrachsanhänger sein kann, gezogen bzw. geladen werden, wobei die Holzstämme vermittels der Anhebeeinrichtung 3 auf der Ladefläche des Anhängers 1 übereinander geschichtet werden können.

Die externe Seilwinde 5 kann beispielsweise an einem Traktor (nicht dargestellt) angebracht sein. Die Verbindung einer externen Seilwinde 5 mit einem Traktor wird üblicherweise durch eine Dreipunkt-Verbindung oder einem sogenannten Festanbau realisiert. Beim Rücken verläuft das Seil 12 ausgehend von der Seilwinde 5 über eine Umlenkrolle 13 vorne am Anhänger 1 über die Ladefläche des Anhängers 1 und über die Anhebeeinrichtung 3 zum Holzstamm. Die Umlenkrolle 13 kann an der Seilwinde 5 oder am Anhänger 1 montiert sein. Sie kann auf einem Niveau oberhalb der maximalen Ladehöhe für die Holzstämme befestigt oder, falls zweckmäßig, höhenverstellbar ausgebildet sein. Der rotatorisch drehende Drehrahmen 3 mit drehbare Auflagerolle 11, über die die Holzstämme beim Beladen des Anhängers 1 gezogen werden, wird durch einen Hubzylinder 7 angetrieben und um die Drehachse 14 nach oben gedreht. Die drehbare Auflagerolle 11 erleichtert zudem das Gleiten der Holzstämme 10 beim Ladevorgang.

Die Figur 2 zeigt den Rückelader von Figur 1 während des Ladevorgangs mit einem auf der Auflagerolle 11 aufliegenden Holzstamm 10 und angehobenem Drehrahmen 3. Der Holzstamm 10 wurde durch die drehbare Auflagerolle 11, die mit dem Drehrahmen 3 verbunden ist, angehoben. Durch die Zugwirkung des Seiles 12 kann der Holzstamm 10 in dieser Darstellung auf den Einachsanhänger 1 gezogen werden. Durch die vertikale Anordnung der Umlenkrolle 13 und die Position der drehbaren Auflagerolle 11 kann der Holzstamm 10 in der dargestellten Weise auf den Anhänger 1 geschichtet werden.

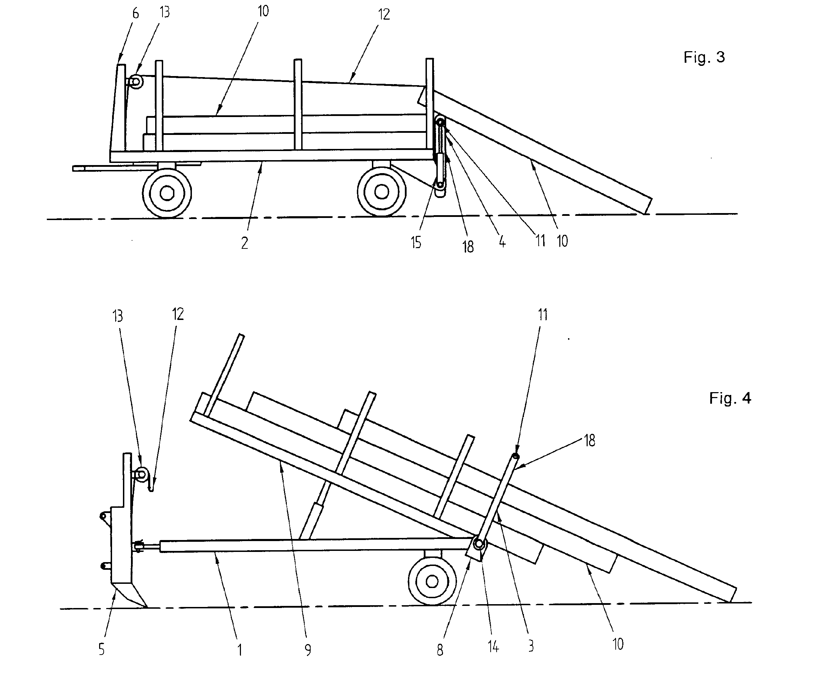

Bei dem in Figur 3 dargestellten zweiten Ausführungsbeispiel eines Rückeladers handelt es sich um einen Zweiachsanhänger 2 mit linear beweglichen Hubrahmen 4. Dieser Hubrahmen weist zwei beispielsweise gerade Hubarme 18 auf, die an gegenüberliegenden Seiten hinten am Zweiachsanhänger 2 angeordnet sind und zwischen deren oberen Enden ein Auflageelement für das Lang- oder Kurzholz 10 befestigt ist. Dieses Auflageelement kann unterschiedliche gestaltet sein, beispielsweise in Form einer einfachen geraden oder auch, falls zweckmäßig, gebogenen Stange oder in Form einer Auflagerolle 11, welche vorliegend als bevorzugtes Beispiel gewählt ist.

Durch eine interne Seilwinde 6, die wie dargestellt auf den Zweiachsanhänger 2 im vorderen Teil montiert ist, kann auf eine externe Seilwinde 5 verzichtet werden. Am hinteren Ende wird wie dargestellt, der Holzstamm 10 durch den linear beweglichen Hubrahmen 4, angetrieben von mindestens einem hydraulischen Antriebszylinder 15, vertikal oder schräg angehoben und analog dem oben erläuterten ersten Ausführungsbeispiel über die Auflagerolle 11 auf den Zweiachsanhänger 2 gezogen. Nicht dargestellt ist eine weitere alternative Anordnung, indem die interne Seilwinde 6 und der linear bewegliche Hubrahmen 4 an einem Einachsanhänger 1 in entsprechender Weise montiert sind.

Das in Figur 4 dargestellte dritte Ausführungsbeispiel ist ein Rückelader mit einem Einachsanhänger 1 und einem Kipprahmen 9, vermittels dem die Ladefläche des Einachsanhängers 1 gekippt werden kann, beim Entladevorgang, das heißt beim Abladen des Lang- oder Kurzholzes 10. Beispielhaft wird hier der rotatorisch drehende Drehrahmen 3 im Unterschied zum erstgenannten Ausführungsbeispiel durch einen hydraulischen Drehmotor 8 angetrieben. Deutlich erkennbar ist dabei, dass der rotatorisch drehende Drehrahmen 3 und der Kipprahmen 9 über eine gemeinsame Drehachse 14 drehbar gelagert sind. Zudem ist der Drehmotor 8 mit dem Kipprahmen 9 verbunden. Nicht dargestellt ist zudem, dass die Hubzylinder 7 mit dem Kipprahmen 9 verbunden sind. Die Arbeitsweise beim Beladen des Einachsanhängers 1 ist analog zu der im Zusammenhang mit dem erstgenannten Ausführungsbeispiel beschriebenen. Selbstverständlich kann beim dritten Ausführungsbeispiel an Stelle des Einachsanhängers ein Mehrachsanhänger oder eine Lkw-Ladefläche verwendet sein. Ebenso kann an Stelle eines Drehrahmens ein Hubrahmen, wie er in Verbindung mit dem Auführungsbeispiel gemäß Figur 3 beschrieben ist, verwendet werden.

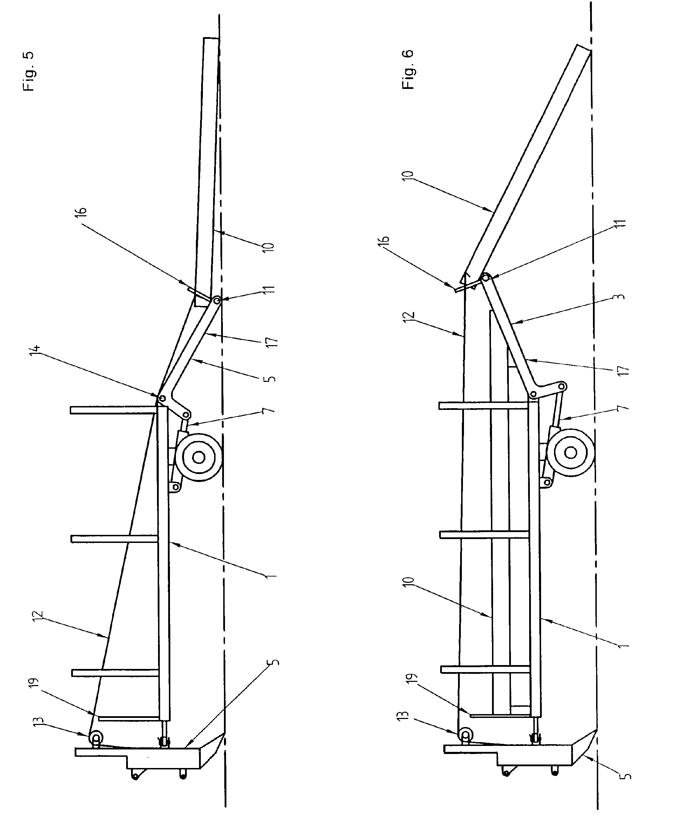

Das in den Figuren 5 und 6 dargestellte vierte Ausführungsbeispiel unterscheidet sich von dem gemäß Figur 1 dadurch, dass am Drehrahmen 3 ergänzend Seitenbegrenzungselemente 16 vorgesehen sind, die dazu dienen, während des Anhebens des Drehrahmens und damit des Auflageelements, hier wiederum eine Auflagerolle 11, und dem nachfolgenden Ladevorgang ein seitliches Abrutschen des Holzstammes vom Drehrahmen zu verhindern. Die Seitenbegrenzungselemente befinden sich im von der Drehachse entfernten Endbereich der Hubarme 17 und ragen von dort aus nach oben und sind beispielweise aus einem Metallrohr gefertigt. Figur 5 zeigt das vierte Ausführungsbeispiel mit abgesenktem Drehrahmen 3 und bereits auf der Auflagerolle 11 aufliegendem Holzstamm 10. Figur 6 zeigt das vierte Ausführungsbeispiel mit angehobenem Drehramen 3 bevor der Holzstamm 10 auf die Ladefläche des Anhängers 1 gezogen wird.

Die Seitenbegrenzungselemente 16 können zudem vorteilhafterweise als Umlenkelemente für das Zugseil 12 genutzt werden, damit seitlich vom Transportfahrzeug liegende Holzstämme herangezogen werden können, ohne dass zusätzlich externe Umlenkvorrichtungen verwendet werden müssen.

Des Weiteren weist das Ausführungsbeispiel gemäß den Figuren 5 und 6 am der Anhebeeinrichtung gegenüberliegenden Seite des Anhängers 1 eine Prallelement 19, insbesondere ein Prallgitter auf. Dieses Prallgitter hat die Aufgabe, dass bereits geladene Holzstämme beim Laden weiterer Holzstämme, die über die bereits geladenen Holzstämme gezogen werden, nicht weiter nach vorne zur Seilwinde hin geschoben werden.

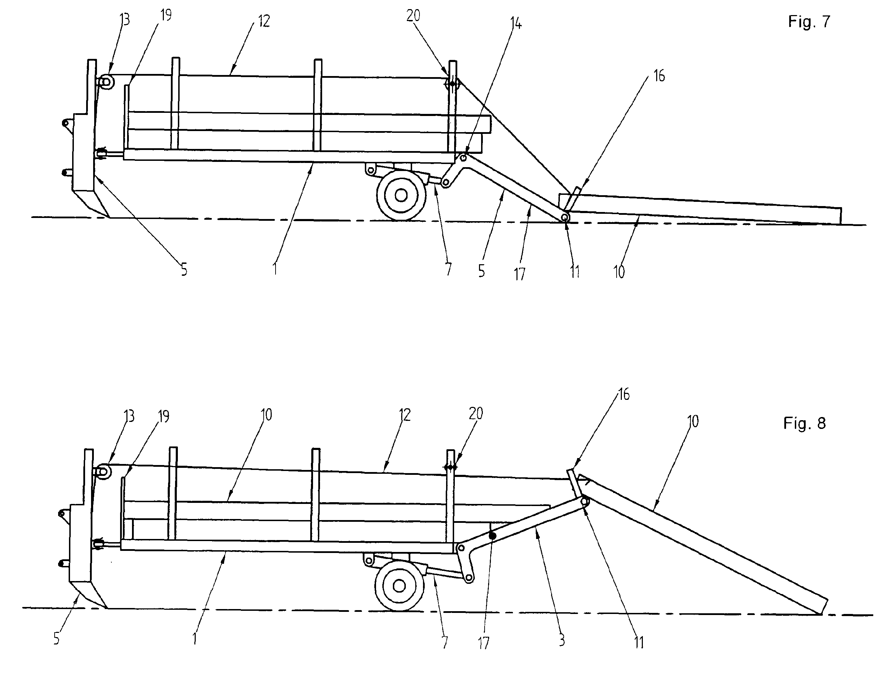

Das in den Figuren 7 und 8 dargestellte fünfte Ausführungsbeispiel entspricht dem vierten Ausführungsbeispiel mit dem Unterschied, dass am hinteren Ende des Anhängers 1 mindestens eine Seilführungsrolle 20 (hier je eine an beiden Seiten des Anhängers) angeordnet ist. Die Seilführungsrolle 20 ist an einer seitlich am Anhänger 1 angeordneten senkrechten Stütze, beispielsweise an einer Runge, angeordnet. Sie kann beispielsweise auf einem Niveau oberhalb der maximalen Ladehöhe für die Holzstämme befestigt oder, falls zweckmäßig, höhenverstellbar sein. Die Seilführungsrolle 20 erleichtert das Ausziehen des Zugseils 12 zu den zu rückenden Holzstämmen hin sowie das Heranziehen der Holzstämme zum Anhänger 1, indem sie ein Verklemmen des Zugseils 12 zwischen bereits geladenen Holzstämmen verhindert. Nach dem Anheben eines Holzstammes mit dem Drehrahmen wird das Zugseil aus der Seilführungsrolle 20 ausgehängt, um nachfolgend den Holzstamm 10 auf den Anhänger 1 ziehen zu können. Letzteres ist in Figur 8 dargestellt.

Seitenbegrenzungselemente 16, Prallelement 19 und Seilführungsrolle 20 können selbstverständlich auch bei den übrigen oben beschriebenen Ausführungsbeispielen oder jeglicher anderer in den Bereich der Erfindung fallenden Vorrichtung zum Rücken und Laden von Holzstämmen eingesetzt werden. Ebenso lassen sich verschiedene in den unterschiedlichen Ausführungsbeispielen erläuterten Elemente untereinander kombinieren, ohne dass die dabei entstehenden Vorrichtung aus dem Bereich der erfindungsgemäßen Vorrichtung herausführt. So ist es zum Beispiel auch möglich, dass eine Anhebeeinrichtung Verwendung findet, die sowohl eine drehbare Komponente als auch eine translatorisch bewegbare Komponente aufweisen. Hierbei ist beispielsweise an einen Drehrahmen mit teleskopartig ausgebildeten und in ihrer Länge variierbaren Dreharmen zu denkbar.

Die Erläuterung der erfindungsgemäßen Vorrichtung anhand der Ausführungsbeispiele ist nicht als Beschränkung der Erfindung auf die darin konkret beschriebenen Kombinationen von Einzelelementen zu verstehen. Vielmehr sind die verschiedenen neuartigen Einzelelemente für sich alleine sowie auch ihr vorteilhaftes Zusammenwirken als separate Erfindungsgedanken zu betrachten.

## Patentansprüche

1. Vorrichtung zum Rücken und Laden von Lang- oder Kurzholz (10) mit einem Transportfahrzeug (1,2), das zum Transport des Lang- oder Kurzholzes vorgesehen ist, mit einer Seilwinde (5,6), die vorne an dem Transportfahrzeug angeordnet ist, und mit einem Zugseil (12), mit dem das Lang- oder Kurzholz (10) vermittels der Seilwinde (5,6) zum Transportfahrzeug (1,2) hin rückbar ist,
**dadurch gekennzeichnet, dass**
hinten am Transportfahrzeug (1,2) eine Anhebeeinrichtung (3,4) mit einem Auflageelement (11) angeordnet ist, das vermittels der Anhebeeinrichtung (3,4) wahlweise absenkbar oder anhebbar ist, derart, dass vermittels der Seilwinde (5,6) auf das Auflageelement (11) gerücktes Lang- oder Kurzholz angehoben und nachfolgend über das Auflageelement (11) hinweg auf das Transportfahrzeug (1,2) gezogen und geladen werden kann.

2. Vorrichtung nach Anspruch 1,
**dadurch gekennzeichnet, dass** das Transportfahrzeug (1,2) ein Anhänger (1,2) ist.

3. Vorrichtung nach Anspruch 1 oder 2,
**dadurch gekennzeichnet, dass** als Anhebeeinrichtung ein rotatorisch drehbarer Drehrahmen (3) vorgesehen ist.

4. Vorrichtung nach Anspruch 1 oder 2,
**dadurch gekennzeichnet, dass** als Anhebeeinrichtung ein linear bewegbarer Hubrahmen (4) vorgesehen ist.

5. Vorrichtung nach mindestens einem der Ansprüche 1 bis 4,
**dadurch gekennzeichnet, dass** das Transportfahrzeug einen Kipprahmen (9) aufweist, vermittels dem das Lang- oder Kurzholz durch Kippen abgeladen werden kann.

6. Vorrichtung nach Anspruch 5,
**dadurch gekennzeichnet, dass** im Falle eines rotatorisch drehbaren Drehrahmens (3) dieser mit dem Kipprahmen (9) eine gemeinsame Drehachse (14) aufweist.

7. Vorrichtung nach Anspruch 5 oder 6 **dadurch gekennzeichnet, dass** im Falle eines rotatorisch drehenden Drehrahmens (3) dieser durch einen Hubzylinder (7) oder Drehmotor (8) hydraulisch angetrieben wird und dieser mit dem Kipprahmen (9) verbunden ist.

8. Vorrichtung nach mindestens einem der Anspruch 1 bis 5,
**dadurch gekennzeichnet, dass** im Falle eines linear bewegbaren Hubrahmens (4) dieser durch einen Antriebszylinder (15) angetrieben wird.

9. Vorrichtung nach Anspruch 5 oder 5 und 8,
**dadurch gekennzeichnet, dass** im Falle eines linear bewegbaren Hubrahmens (4) dieser mit dem Kipprahmen (9) verbunden ist.

10. Vorrichtung nach Anspruch 5 oder nach mindestens einem auf Anspruch 5 unmittelbar oder mittelbar zurückbezogenen Anspruch,
**dadurch gekennzeichnet, dass** vorne am Transportfahrzeug (1,2) eine Umlenkrolle (13) für das Zugseil (12) vorgesehen ist, die auf einem Niveau oberhalb einer Ladefläche des Transportfahrzeugs (1,2) angeordnet oder höhenverstellbar ausgebildet ist.
